# EUROPEAN PATENT APPLICATION

(11) **EP 2 897 050 A1**
(43) Date of publication of application: **22.07.2015**
(21) Application number: 13837979.7
(22) Date of filing: 09.09.2013
(51) Int. Cl.: G06F 11/16, G06F 11/18, G10L 19/00

(54) **SIGNAL PROCESSING SYSTEM AND PROGRAM**

(30) Priority: 14.09.2012 JP 2012202797
(71) Applicant: Yamaha Corporation, Hamamatsu-shi, Shizuoka 430-8650 (JP)
(72) Inventor: MIWA, Akihiro, Hamamatsu-shi Shizuoka 430-8650 (JP)
(74) Representative: Ettmayr, Andreas
(86) International application number: PCT/JP2013/074241
(87) International publication number: WO 2014/042122

(57) **Abstract**

When an audio data is received from the input/output device (I/O) (13), the received audio data is transmitted to a PC (10) (first processing engine) and a PC (11) (second processing engine) in parallel. The first processing engine performs signal processing in the PC (10), and the second processing engine performs signal processing in the PC (11). They send back the processed audio data to a network SW (12). The network SW (12) determines whether or not the audio data received from the PC (10) and the PC (11) is normal, and selectively transfers the audio data determined to be normal to the input/output device (13).

## Description

### {Technical Field}

The invention relates to a signal processing system and a computer program that are capable of suppressing occurrence of noise in signal processing for real-time applications.

### {Background Art}

In recent years, due to performance improvements in a CPU (Central Processing Unit) and software, it has been becoming possible to perform audio signal processing in application software on a general purpose-operating system (OS) such as Windows (trademark) to operate in a general-purpose personal computer (PC) (see NPL1).

### {Citation List}

### {Non Patent Literature}

{NPL1} Steinberg Media Technologies GmbH "cubase/details", [online], [retrieved on September 9, 2012], the Internet <http://japan.steinberg.net/jp/products/cubase/details.html>

### {Summary of Invention}

### {Technical Problem}

In audio signal signal processing for real-time applications, when the signal processing is not in time for the timing at which the signal should be outputted, audio signals become discontinuous to be noises. Therefore, the audio signal processing needs stability and continuity. When signal processing for real-time applications is executed in software to operate in a general-purpose PC, various interrupt processes occur independently of the signal processing, so that the signal processing needs to be suppressed to such latency and processing load as not to cause problems as long as the PC is in a normal use state. However, due to the interrupt processing and processing loads of other processes, there is sometimes a case that processing of signal processing software being a high level is made to wait and a not negligible delay is caused in the signal processing. On this occasion, when the signal processing being executed by the software is not completed by the timing at which the signal should be outputted, there is a problem that signals become discontinuous to cause noises.

Thus, the present invention has an object to provide a signal processing system and a computer program that prevent noise from occurring as much as possible even when audio signal processing for real-time applications is executed by software to operate in a general-purpose PC.

### {Solution to Problem}

To attain the above object, a signal processing system of the invention is a signal processing system in which an output device is connected to a plurality of signal processing engines, mainly characterized in that each of the signal processing engines is configured to, when performing signal processing on same signal transmitted to the individual signal processing engines in parallel and outputting processed signal to the output device, add information indicating whether or not the signal processing has been completed normally to the signal, and the output device is configured to selectively use, out of signal data received from the individual signal processing engines, the signal data to which the information indicating that the processing has been completed normally is added.

### {Advantageous Effects of Invention}

The present invention is configured to make signal processing engines redundant (multiplex) and to output "signal data on which processing has been completed normally" in an output device. This makes it possible to suppress occurrence of noise and to improve reliability in signal processing for real-time applications. That is, a processing load independent of signal processing, caused by interrupt process or the like, is less likely to occur in a plurality of signal processing engines simultaneously, so that as long as the signal processing in any one of the signal processing engines is in time, noise does not occur.

Further, the signal processing engines are made redundant, so that even if, for example, one of the signal processing engines breaks down temporality or permanently, the signal processing operation can be continued and availability (failure resistance) is also improved.

Further, since the external devices access to the output device, the output device can be utilized as a single signal processing engine apparently.

### {Brief Description of Drawings}

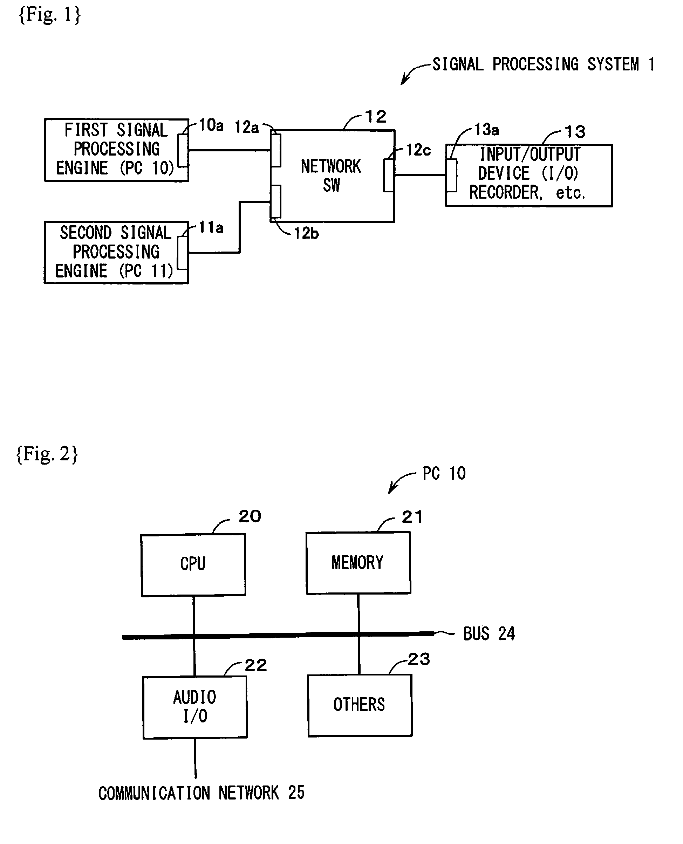

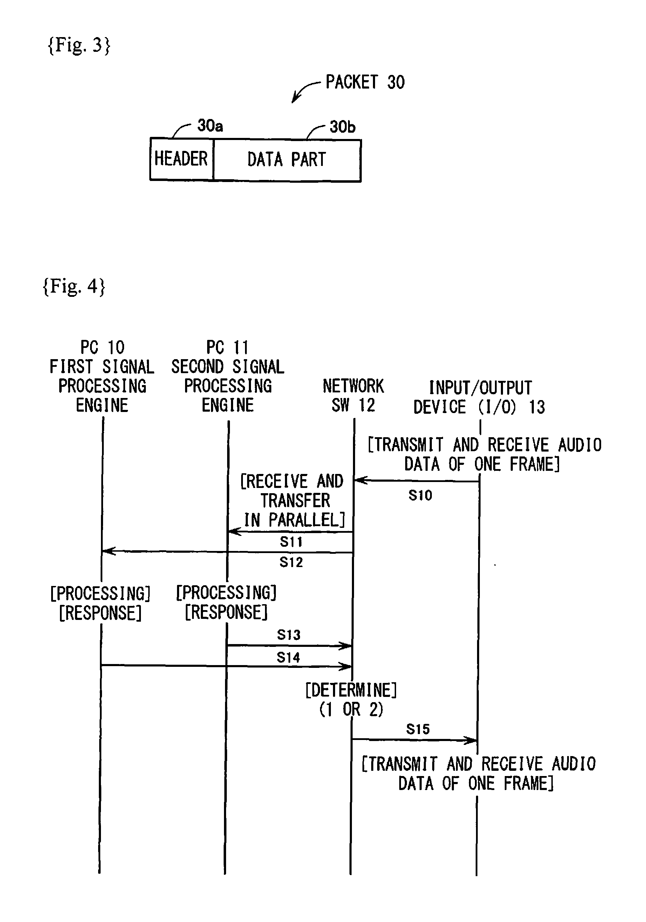

{Fig. 1} Fig. 1 is a block diagram illustrating a constitution of a signal processing system of an embodiment of the present invention;
{Fig. 2} Fig. 2 is a block diagram illustrating a hardware configuration of a PC in the signal processing system according to the present invention;
{Fig. 3} Fig. 3 is a view illustrating a data structure of a packet in the signal processing system according to the present invention; and
{Fig. 4} Fig. 4 is a sequence diagram illustrating an operation of the signal processing system according to the present invention.

### {Description of Embodiments}

There is illustrated a block diagram illustrating a constitution of a signal processing system of an embodiment of the present invention in Fig. 1.

A signal processing system 1 illustrated in Fig. 1 is constituted by a general-purpose personal computer (PC) 10 functioning as a first signal processing engine, a general-purpose personal computer (PC) 11 functioning as a second signal processing engine, and a network SW (network switch) 12 disposed between the two PCs 10 and 11 and an input/output device 13 such as a recorder. The two PCs 10 and 11, the network SW 12, and the input/output device 13 are connected via a communication network such as Ethernet (trademark), for example. Then, in the two PCs 10 and 11, the network SW 12, and the input/output device 13, network audio cards 10a, 11a, 12a, and 13a each having an audio I/O function capable of transmitting an audio packet in real time are provided respectively, thereby making it possible to perform transmission and reception of signal data according to an arbitrary communication protocol (for example, Dante, Cobranet, EtherSound, or the like) one another. In this case, at least in the individual PCs 10 and 11 (the first signal processing engine and the second signal processing engine) and the network SW 12, synchronized are clocks and time stamps used for managing and controlling transmission and reception of signal data. Concretely, clocks of the network audio cards 10a and 11 a, and a clock of the network audio card 12a are synchronized. Incidentally, in this example, the network audio card 12a has three or more of input/output ports. Further, the first signal processing engine and the second signal processing engine are softwares to be executed on a general-purpose operating system (OS) such as Windows (trademark) to operate in the PCs 10 and 11.

A hardware configuration of the PC 10 and a hardware configuration of the PC 11 are the same, and as a representative, the hardware configuration of the PC 10 is illustrated in Fig. 2.

As illustrated in Fig. 2, in the PC 10, the general-purpose operating system (OS) such as Windows (trademark) is executed in a CPU (Central Processing Unit) 20, and the software of the signal processing engine can be executed on this OS. When the software of the signal processing engine is executed, the PC 10 starts to function as the signal processing engine. For a memory 21, various storage devices such as RAM, ROM, HDD, and flash memory can be employed appropriately, and in the memory 21, the software such as the OS and the signal processing engine, another application software, various software programs of an audio driver used for performing transmission and reception of audio data via the network audio card 10a, and the like, various setting data, and files are stored. Further, in the memory 21, a storage area to be a temporary storage area used for signal processing and data transmission is set. An audio I/O 22 is fabricated in the network audio card 10a provided with a function for audio transmission, and is connected to a communication network 25 to which the PC 11, the network SW 12, and the input/output device 13 are connected. The audio I/O 22 interrupts the CPU 20 periodically in a set sampling period or at a time interval according to a frame size, to thereby perform input/output of audio signal data in real time with other audio apparatuses connected to the communication network 25. In this example, the audio I/O 22 has an original clock oscillation source independent of the clock (not illustrated) provided in the PC 10, and a clock of the clock oscillation source is synchronous with clocks of audio I/Os 22 of other devices. Others 23 are a mouse, a keyboard, a monitor, and the like and other communication devices such as USBs, and the like, and are provided appropriately according to purposes, specifications, and functions of the PC 10. The individual portions perform data transmission and reception via a bus 24.

A hardware configuration of the network SW 12 is similar to that of the PC 10 illustrated in Fig. 2, so that its explanation is omitted, but with regard to the hardware configuration of the network SW 12, in a memory 21, network SW programs and programs for later-described determination are stored, and a temporary storage area is set. Further, the audio I/O 22 of the network SW 12 is connected to the communication network 25, but has a plurality of input/output ports.

Audio data to be transmitted to the communication network 25 from the audio I/O 22 is transmitted as a packet. Fig. 3 illustrates a data structure of a packet.

As illustrated in Fig. 3, a packet 30 is, for example, a TCP (Transmission Control Protocol) packet or a UDP (User Datagram Protocol) packet, and is constituted by a header 30a and a data part 30b. The header 30a of the packet 30 is constituted by information of a transmission source and a transmission destination, attribute information of the data part 30b, and the like, and the data part 30b is audio data according to a communication protocol of audio data. With regard to this audio data, for example, a data length of one sample is 32 bits, and a sampling frequency is 44.1 kHz. Here, the size of audio data stored in one packet is the same as the frame size of each of the first signal processing engine, the second signal processing engine, and the audio I/O 22 (for example, 128 samples). Incidentally, the packet is transmitted via the communication network 25, but a transmission delay of the packet is negligible in the following explanation.

Next, there will be explained a flow of audio data for one cycle in the signal processing system 1 of the present invention with reference to a sequence diagram illustrated in Fig. 4.

In the signal processing system 1 of the present invention, at least the audio I/O 22 provided in the PC 10 (the first processing engine) and the audio I/O 22 provided in the PC 11 (the second processing engine) are clock-synchronous with the audio I/O provided in the network SW 12. When receiving packetized audio data for one frame size from the input/output device (I/O) 13 connected via the communication network 25 (Step S10), the network SW 12 transmits the received packet of the audio data to the PC 10 (the first processing engine) and the PC 11 (the second processing engine) in parallel (Steps S11 and S12). In this case, the same audio data is transmitted to the audio I/O 22 in the PC 10 and the audio I/O 22 in the PC 11 in parallel. Signal processing that the PC 10 (the first processing engine) executes on the audio data received from the network SW 12 and signal processing that the PC 11 (the second processing engine) executes on the audio data received from the network SW 12 are set to be the same configuration beforehand. Since the PC 10 (the first processing engine), the PC 11 (the second processing engine), and the network SW 12 are clock-synchronous with one another, in the individual PC 10 (the first processing engine) and the PC 11 (the second processing engine), various processes, which are reception of the audio data from the network SW 12, the signal processing in the first processing engine of the PC 10, the signal processing in the second processing engine of the PC 11, transmission of the signal-processed audio data to the network SW 12, and the like, are performed at substantially the same timing (Steps S13 and S14). However, each of the first processing engine and the second processing engine each is software to be executed on the general-purpose OS, and does not always agree with each other on the timing of the signal processing being completed, the timing of transmission to the network SW 12, and the like, due to various interrupt processes to occur in the PC 10 or the PC 11 where the first processing engine or the second processing engine operates, conditions of processing loads of other processes, and the like. Further, the general-purpose OS has no latency guarantee (or has difficulty in guaranteeing a latency) because of its design or configuration, so that depending on the above-described various interrupt processes and conditions of processing loads of other processes, a not negligible delay sometimes occurs in the signal processing in the first processing engine or the second processing engine. The network SW 12 determines whether or not the audio data received from the PC 10 (the first processing engine) and the PC 11 (the second processing engine) are normal, and selectively transfers the audio data (packet) for one frame determined to be normal to the input/output device 13 (Step S15).

The processing load caused by the interrupt processes or the like and independent of the signal processing is less likely to occur simultaneously in the PC 10 where the first signal processing engine operates and the PC 11 where the second signal processing engine operates. Accordingly, by performing the signal processing in the plural signal processing engines in parallel and transferring, among the plural processed data, an audio data determined to be normal to the input/output device 13 selectively, as long as the signal processing in any one of the signal processing engines is in time, occurrence of noise can be prevented. Further, the signal processing engines are made redundant, so that even if, for example, one of the signal processing engines becomes unstable or breaks down temporarily or permanently, the signal processing operation can be continued, and thus availability (failure resistance) is also improved. Further, the input/output device 13 accesses the single network SW 12, so that when seen from the input/output device 13, the network SW 12 can be used as a single signal processing engine.

The operations related to the above-described signal transmission and signal reception at the PC 10 (the first processing engine) and the PC 11 (the second processing engine), and the operations of the signal transmission, signal reception and transfer processing at the network SW 12 are performed periodically according to the synchronous clocks.

There will be further explained "processing" and "response" in the PC 10 and the PC 11. The audio I/Os 22 of the PC 10 and the PC 11 periodically interrupt the CPUs 20 according to a clock generated by the clock oscillation sources of their own. In response to this, the audio drivers executed in the CPUs 20 perform processing to take in the audio data received in the audio I/Os 22, transmit it to the first signal processing engine or the second signal processing engine, acquire the processed audio data from the first signal processing engine or the second signal processing engine, and transmit it from the audio I/Os 22. The first signal processing engine and the second signal processing engine being the software executed in the CPUs 20 in the PCs 10 and 11 each perform various signal processing such as filter processing, EQ processing, and mixing processing on the transmitted audio data to return it to the audio drivers. The audio drivers have a "processing completion flag," and when being able to acquire signal data according to one interrupt from the first signal processing engine or the second signal processing engine before the timing of the next interrupt, namely in the case of a normal state (in the case where it is in time), the audio drivers set the processing completion flag to "0," and when not being able to acquire it (in the case where it is not in time), the audio drivers set the processing completion flag to "1." Further, when the signal processing in the first signal processing engine or the signal processing in the second signal processing engine is in time, the audio drivers perform processing to return the signal-processed audio data to the network SW 12, and when the signal processing is not in time, the audio drivers perform processing to return dummy data to the network SW 12 because there are no audio data that should be outputted. In the latter case, even when the signal processing is not in time, the audio drivers return audio data at a predetermined timing anyway, but the dummy data that the audio drivers return are data of all "0", the received data themselves, or the like, for example.

There will be further explained an operation of the audio I/O 22 of the network SW 12. The audio I/O 22 of the network SW 12 has a plurality of input/output ports, and recognizes what is connected to each of the input/output ports. In the signal processing system 1 illustrated in Fig. 1, the audio I/O 22 of the network SW 12 recognizes that the PC 10 in which the first signal processing engine operates, the PC 11 in which the second signal processing engine operates, and the input/output device (I/O) 13 such as a recorder are connected to the individual input/output ports. Then, the audio I/O 22 interrupts the CPU 20 in the network SW 12 periodically. In response to this, the CPU 20 in the network SW 12 transmits audio data for one frame (packet) received through the input/output port with the input/output device 13 connected thereto to the input/output port with the PC 10 of the first signal processing engine connected thereto and the input/output port with the PC 11 of the second signal processing engine connected thereto in parallel. Further, the network SW 12 determines whether or not the audio data returned through the input/output port with the PC 10 of the first signal processing engine connected thereto and the audio data returned through the input/output port with the PC 11 of the second signal processing engine connected thereto are normal, and selectively transfers the audio data determined to be normal to the input/output device 13.

Here, when the normal packet (in which it is in time) is transmitted from neither of the first signal processing engine nor the second signal processing engine, there are no audio data that should be outputted, so that the network SW 12 transmits dummy data to the input/output device 13. The dummy data is data of all "0", the received data itself, or the like, for example.

With regard to the "determination" in the network SW 12, there are policies of first-reception priority and last-reception priority to be described next, and the both can be employed.

### (1) First-reception priority

Every time a packet is received, determination is performed successively, and the packet of audio data determined to be normal is transferred immediately. On and after the transfer, a packet of audio data received from other signal processing engines (at the same timing) is destroyed (even though a packet is received, it is not transferred).

### (2) Last-reception priority

At the point when packets of audio data are received from all the signal processing engines (PCs), each of the packets is determined and the packet of audio data determined to be normal is transferred. When there are plural packets determined to be normal, the packet of audio data employed in order of reception or in order of priority set beforehand is transferred.

The above-described processing completion flag can be attached to the header 30a of the packet 30 to be transmitted. In this case, each of the audio I/Os 22 of the PC 10 of the first signal processing engine and the PC 11 of the second signal processing engine acquires the "processing completion flag" from the audio driver together with the audio data. The audio I/O that has acquired the "processing completion flag" attaches the processing completion flag to a predetermined position in the header 30a of the packet 30 to transmit the packet 30 of the audio data to the network SW 12. Incidentally, the header described here indicates information described at the front rather than an audio data body in the data part 30b, and includes not only a TCP header and a UDP header, but also a data header defined by a communication protocol of audio data.

Then, the network SW 12 analyzes the header 30a of the received packet 30 and determines whether or not the received packet is the one including the audio data on which the normal processing has been performed. At the analysis of the header, since the processing completion flag is stored at a predetermined position of the header, be detecting whether information of the predetermined position is "0" or "1", it can be determined whether or not the packet is the one including the audio data on which the normal processing has been performed. The network SW 12 transmits the packet 30 of the audio data with the processing completion flag indicating normal added thereto out of the packets 30 of the audio data received from the PC 10 of the first signal processing engine and the PC 11 of the second signal processing engine to the input/output device 13 selectively.

Further, it is possible to transmit the processing completion flag by using the audio data to be transmitted. In this case, the audio drivers of the PC 10 of the first signal processing engine and the PC 11 of the second signal processing engine each set the least significant bit of a sample of the audio data to be transmitted to "1" in the case where "it is not in time." For example, when the number of bits of the sample is 32 bits, 31 bits are used for the original audio data and the least significant 1 bit is used as the processing completion flag. In this case, the least significant 1 bit may be used as the processing completion flag in all the sample data, or the least significant 1 bit may also be used as the processing completion flag only in part (for example, the head) of the sample data and all 32 bits may also be used as the audio data in the other sample data.

Then, the network SW 12 analyzes the data parts 30b of the received packets 30 and determines whether or not the received packets 30 each are the one including the audio data on which the normal processing has been performed. Next, the network SW 12 transmits the packet 30 of the audio data with the processing completion flag indicating normal added thereto out of the packets 30 of the audio data received from the PC 10 of the first signal processing engine and the PC 11 of the second signal processing engine to the input/output device 13 selectively.

### {Industrial Applicability}

In the signal processing system of the present invention explained above, two of the first signal processing engine and the second signal processing engine are prepared, but the number of signal processing engines is not limited to this, and three or more of signal processing engines may also be prepared. Further, the PCs, the network SW, and the other devices each may also be a virtual machine. For example, the signal processing engines may also be operated in a plurality of virtual PCs structured by virtualizing a single PC individually. Alternatively, it is also possible that the individual PCs are structured on virtual servers provided by a plurality of physical computer devices and in the individual virtual servers, the signal processing engines are operated.

Further, a transmission path of the communication network according to the present invention is also not limited to a transmission path connected by a physical cable, and may be a virtualized transmission path. For example, it may also be a virtual transmission path such as a data transfer among a plurality of virtual PCs via physical memories. Further, the frame size of one packet may be set independently of the frame sizes of the signal processing engines and the audio I/Os. For example, it is also possible that the frame size of one packet is set to 8 samples and the frame size of the signal processing engine or the audio I/O is set to 128 samples, and the like.

The above-explained signal processing system of the present invention has explained the example where the audio I/O interrupts the CPU periodically, but is not limited to this, and the CPU may also poll the state of the audio I/O. Further, the example where the processes to determine whether or not the signal processing is in time and to attach the processing completion flag to the packet of audio data, and the like are performed in the CPU of the PC has been described, but the signal processing system of the present invention is not limited to this, and part of or all the processes may be performed in the audio I/O. Alternatively, it is also possible to make both the CPU of the PC and the CPU of the audio I/O perform the processes. In this case, even when the CPU of the PC hangs up, part of or all the processes can be performed on the audio I/O side.

Further, in the signal processing system of the present invention, the transmission delay of the communication network is assumed to be negligible, but when the transmission delay of the communication network is considered, for example, it is also possible that time stamps added to packets are observed and on the packets with the same time stamp added thereto, the above-explained processes to determine and select the packets are performed. Incidentally, in audio transmission protocols that can be employed in the signal processing system of the present invention, a time stamp is often added to a packet and the like including audio data to be transmitted, and this can be used.

Further, the signal processing system of the present invention is premised on Ethernet and the communication protocol in which data transmission is performed via Ethernet, but the communication standard and the protocol are not limited to these, and other communication standards and protocols such as S/PDIF (Sony Philips Digital Interface) and AES/EBU (Audio Engineering Society/European Broadcasting Union) can be used. For the transmission path of data, other than the cable through which a signal is transmitted electrically, an optical fiber or a radio may also be used. Further, the unit of adding the processing completion flag is set to a unit of packet, but is not limited to this, and the processing completion flag may also be added in a unit of transfer frame (for example, a frame of Ethernet), for example. Furthermore, the signal to be transmitted is not limited to the audio data, and may also be video data, and the invention is applicable as long as the signal processing system is a system in which transmission and processing of signals or data for real-time applications are performed.

Furthermore, in the signal processing system of the present invention, the "determination" performed in the network SW may also be performed in the input/output device such as a recorder, for example. In this case, the network SW can be a general-purpose network switch, and the input/output device such as a recorder directly performs transmission and reception of audio data with respect to the plural signal processing engines (PCs).

Furthermore, variations of the processing completion flag added to the packet according to the present invention include the following aspects.
(1) The audio data is set to data with a predetermined pattern such as all "0", thereby exhibiting a "state of not-being in time." That is, the dummy data itself to be transmitted when it is not in time becomes the processing completion flag.
(2) The sample of audio data is cut and the body data of the data part of the packet is made to be "0," thereby exhibiting a "state of not-being in time." In this case, the data length of the packet described in the header is only the length equivalent to the header. That is, the data length being 0 results in the processing completion flag.
(3) Predetermined code information including a steganographic processing completion flag is embedded in audio data. In this case, the data to be embedded is not limited to 1-bit data, and the processing completion flag, other state information, and the like are embedded as an electronic watermark.

Furthermore, in the signal processing system of the present invention, the state of the processing completion flag of each packet and the reach condition of the packet itself are monitored, thereby making it possible to monitor the operation state of each of the signal processing engines indirectly. For example, when the "state of not-being in time" and the state where no packet is received are continued with respect to a certain signal processing engine (a PC) (for example, for 1 minute or longer), it is possible to determine that any trouble, a setting mistake, or the like is highly likely to occur in the signal processing engine. It is also possible that the network SW monitors such circumstances to provide warning or the like as necessary.

Furthermore, in the signal processing system of the present invention, the audio data to be transmitted has been explained to be a digital signal and to be transferred in packet, but may also be an analog signal. In this case, the PC and the network SW, and the network SW and the input/output device are each bidirectionally connected by transmission paths through which unidirectional communication is performed respectively. It is only necessary that, at a predetermined time interval (for example, 10 ms) as a unit, the processing completion flag is be superimposed on an analog audio signal as an audio watermark described in International Publication Pamphlet No. WO2010/016589 proposed by the present applicant, and the individual devices encodes or decodes the processing completion flag. The network SW 12 only needs to be constituted as a signal selection switch to decode (extract) the processing completion flag added as an audio watermark from the analog audio signal and based on this, to selectively output an analog audio signal from the PC 10 or an analog audio signal from the PC 11.

### {Reference Signs List}

1... signal processing system, 10, 11... PC, 10a, 11a, 12a, 13a... network audio card, 12... network SW, 13... input/output device, 20... CPU, 21... memory, 22... audio I/O, 23... others, 24... bus, 25... communication network, 30... packet, 30a... header, 30b... data part

## Claims

1. A signal processing system in which an output device is connected to a plurality of signal processing engines, wherein
each of the signal processing engines is configured to, when performing signal processing on same signal transmitted to the individual signal processing engines in parallel and outputting processed signal to the output device, add information indicating whether or not the signal processing has been completed normally to the signal, and the output device is configured to selectively use, out of signal data received from the individual signal processing engines, the signal data to which the information indicating that the processing has been completed normally is added.

2. The signal processing system according to claim 1, wherein
the individual signal processing engines and the output device are connected one another by a communication network, and the output device is a network switch configured to selectively transfer, out of signal data received from the individual signal processing engines, the signal data to which the information indicating that the processing has been completed normally is added to a different device.

3. The signal processing system according to claim 1 or 2, wherein
the output device is configured to receive the signal data from the plural signal processing engines, and based on information added to each of the received signal data, determine whether or not each of the signal data is normal, and output the signal data determined to be normal.

4. The signal processing system according to any one of claims 1 to 3, wherein
the signal processing engine is configured to periodically perform signal processing, output processed signal data, determine whether or not the signal processing has been completed normally, and add a determination result to the signal data to be outputted.

5. A computer program that enables a computer, which functions as an output device in a signal processing system including a plurality of signal processing engines and the output device connected one another, to execute:
a receiving step of receiving signal data from the plural signal processing engines;
a determining step of determining whether or not each of the signal data is normal based on information added to each of the received signal data; and
a step of selectively utilizing the signal data which is determined to be normal in the determining step.

6. A computer program that enables a computer, which functions as a signal processing engine in a signal processing system including a plurality of signal processing engines and an output device connected one another, to execute:
a signal processing step of periodically perform signal processing;
a determining step of determining whether or not the signal processing has been completed normally and adding a determination result to signal data; and
an outputting step of outputting the signal data to which the determination result is added.
